## Europäisches Patentamt
## European Patent Office
## Office européen des brevets

(19)

(11) Numéro de publication: **0 112 222**
**B1**

(12) # FASCICULE DE BREVET EUROPÉEN

(45) Date de publication du fascicule du brevet:
**26.11.86**

(51) Int. Cl.⁴: **C 03 B 37/03,** C 03 B 37/02, C 03 B 37/025, C 03 C 25/02

(21) Numéro de dépôt: **83402295.6**

(22) Date de dépôt: **29.11.83**

(54) **Dispositif de fabrication d'un objet à structure chiralique à partir d'une source de matière formable.**

(30) Priorité: **10.12.82 FR 8220766**

(43) Date de publication de la demande:
**27.06.84 Bulletin 84/26**

(45) Mention de la délivrance du brevet:
**26.11.86 Bulletin 86/48**

(84) Etats contractants désignés:
**DE GB NL SE**

(56) Documents cité:
**EP-A-0 078 733
DE-B-3 010 005
FR-A-1 397 991
GB-A-1 386 200**

(73) Titulaire: **THOMSON- CSF, 173, Boulevard Haussmann, F-75379 Paris Cedex 08 (FR)**

(72) Inventeur: **Dubos, Jacques, THOMSON- CSF SCPI 173, bld Haussmann, F-75379 Paris Cedex 08 (FR)**
Inventeur: **Gauthier, Francis, THOMSON- CSF SCPI 173, bld Haussmann, F-75379 Paris Cedex 08 (FR)**

EP 0 112 222 B1

## Description

La présente invention se rapporte au dispositif de fabrication d'un objet étiré à partir d'une source de matière formable présentant une structure chiralique.

Cet objet étiré a une section quelconque; ce peut être, par exemple, une fibre optique. C'est le cas qui sera considéré à titre non limitatif dans la suite de la description.

Les fibres monomodes fabriquées habituellement pour les télécommunications présentent toujours un peu de biréfringence linéaire, et de biréfringence circulaire. Par suite ces fibres ne conservent ni la polarisation linéaire, ni la polarisation circulaire.

Il est possible de rendre la fibre très biréfringente linéaire en cassant la symétrie circulaire au profit d'une symétrie planaire.

Il est également possible de considérer une méthode inverse, qui consiste à introduire une biréfringence circulaire élevée de façon à conserver la polarisation circulaire.

Une solution pour créer cette polarisation circulaire consiste à soumettre la fibre de verre à une contrainte statique de torsion, par exemple appliquée extérieurement par torsion entre ses deux extrémités: un effet de la torsion de cette fibre est d'introduire une biréfringence circulaire dans celle-ci.

La présente invention a pour objet un dispositif de fabrication permettant de figer un état de torsion induit par une contrainte appliquée de façon transitoire. Elle permet de mémoriser une structure hélicoïdale ou structure chiralique de cette fibre.

Pour la fabrication d'une fibre optique, les techniques verrières les plus classiques consistent à fondre les matières premières de départ, à les affiner et à les fibrer en tirant sur le matériau en fusion. Mais plutôt que de partir d'un état fondu, on préfère le plus souvent partir d'une préforme qui préfigure, à une homothétie près la géométrie de la fibre désirée qu'il suffira alors d'étirer.

Ainsi dans le système des fibres de verre de silice dopée, un moyen de fabrication de cette fibre déjà proposé consiste à faire tourner la préforme à très grande vitesse dans le four d'étirage.

Ce procédé présente de nombreux inconvénients: comme la préforme n'est pas un cylindre parfait, sa mise en rotation à l'état visqueux fondu entraîne la création de défauts dans la fibre. En faisant tourner la préforme, du fait de la force centrifuge, le matériau à l'état mou attiré vers l'extérieur subit une déformation latérale; en effet, la préforme qui est un barreau de verre de 40 à 100 centimètres de long a une masse importante. En outre l'effet de précession est lui aussi important. Aussi le spectre de défaut obtenu pour la fibre n'est pas le spectre recherché.

Les procédés de fabrication de fibres qui n'utilisent pas de préformes, par exemple le procédé du double creuset dans lequel on utilise, pour fabriquer une fibre optique, un double creuset dans lequel on place le verre de gaine à la partie externe et le verre de coeur à l'intérieur, ces matières premières étant fondues, affinées et étirées, ne peuvent bénéficier de ce procédé consistant à faire tourner la préforme vues les difficultés qu'il y aurait à faire tourner le double creuset.

Pour pallier ces inconvénients, on peut ne plus faire tourner la préforme mais la fibre. Ainsi on obtient une fibre présentant des qualités de conservation de la polarisation circulaire. Pour cela un procédé de réalisation consiste à faire subir à la fibre, au cours de son fibrage, une torsion suivie d'une trempe qui permet de figer dans la structure une partie des contraintes de torsion ainsi obtenues, ce qui détruit la symétrie droite-gauche de la fibre classique. On crée ainsi une fibre chiralique.

Mais dans un tel dispositif les organes de bobinage tournent, ainsi que la fibre lors de son défilement, à travers les divers enducteurs, ce qui est une cause de limitation de cette vitesse de torsion de la fibre.

Un dispositif de ce type est décrit dans le brevet DE-B1-3 010 005 ou dans la demande de brevet EP-A1-0 078 733, ce dernier document appartenant à l'Etat de la technique selon l'Article 54 (3) de la C.B.E.

La présente invention se fixe pour but, tout en conservant les avantages de ce dispositif, de pallier les inconvénients et difficultés qui viennent d'être rappelés.

La présente invention réalise une simplification importante de ce dispositif.

L'invention a pour objet un dispositif de fabrication d'un objet de structure chiralique comportant une source de matière formable constituant un volume d'étirage, suivie de moyens d'enduction de l'objet d'une enveloppe jouant le rôle de frette, puis de moyens de trempage, permettant de solidifier cette enveloppe autour de cet objet et de moyens de traction de cet objet à partir de ce volume d'étirage, le dispositif comportant également des moyens de torsion de cet objet, caractérisé en ce que les moyens de torsion de cet objet sont disposés entre la source et les moyens d'enduction.

L'invention sera mieux comprise, et d'autres caractéristiques apparaîtront au moyen de la description qui suit, en se reportant aux figures qui l'accompagnent, parmi lesquelles:

- la figure 1 illustre schématiquement le procédé de l'art antérieur.

- la figure 2 illustre un dispositif de mise en oeuvre du procédé illustré à la figure 1.

- la figure 3 illustre le dispositif selon l'invention.

L'objet étiré peut avoir une section quelconque, et il peut être réalisé en différents matériaux: verre organique ou minéral, plastique, métal par exemple.

Dans la suite de la description, on considérera une fibre optique, mais cela n'est aucunement limitatif.

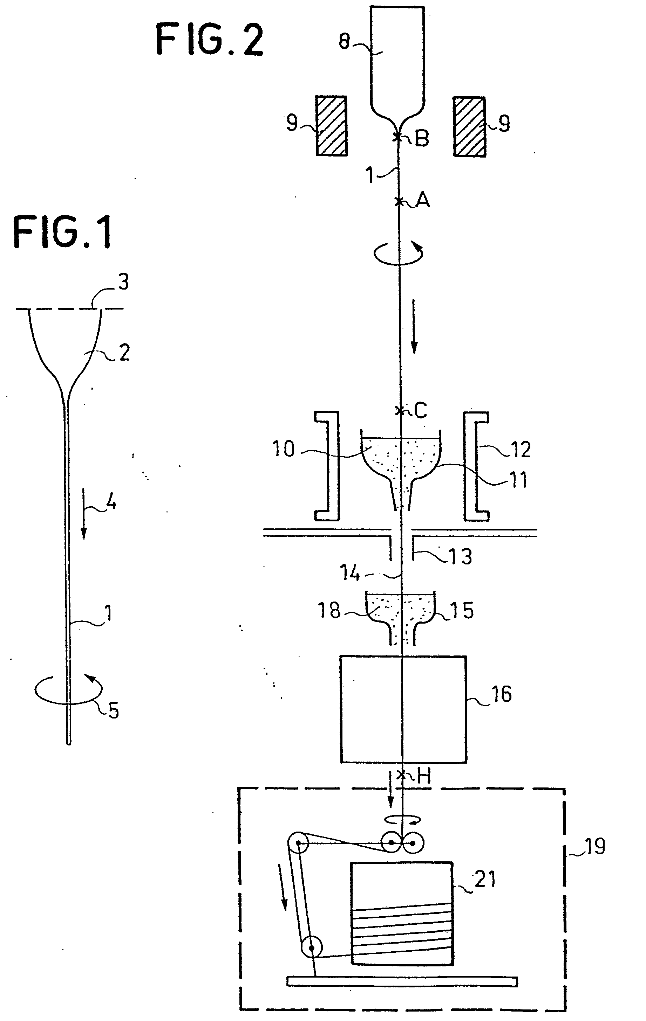

L'invention sera mieux comprise en se basant sur un procédé illustré schématiquement à la figure 1.

Ce procédé permet de considérer la base du volume d'étirage comme étant fixe, généralement il s'agit d'un cône visqueux à partir duquel on forme la fibre par toute technique appropriée de l'art connu, et de tordre ce cône et la fibre en cours de fabrication par rotation axiale de la fibre elle-même. La source de matière et les moyens de formage n'ont pas été représentés pour simplifier la figure.

On considère dans la suite de la description le procédé de fabrication utilisant une préforme, mais ceci n'est pas limitatif, tout autre procédé de fabrication est lui aussi possible.

D'après la figure 1, la fibre 1 est formée par étirage et torsion simultanés à partir du volume d'étirage 2, la base 3 de ce volume n'étant affectée d'aucun mouvement angulaire.

Cette base 3 est considérée comme une surface de référence tout au long de la mise en oeuvre du procédé de l'invention, la préforme est bien évidemment, comme dans les dispositifs de l'art connu, déplacée dans la direction d'étirage de la fibre pour être positionnée à l'intérieur des moyens qui permettent d'amollir l'extrémité de cette préforme. Ces moyens peuvent être des moyens de chauffage, par exemple un four.

Si l'on tord l'extrémité de la fibre, celle-ci va se déformer, et le couple de torsion va être transmis de l'extrémité de la fibre vers le volume d'étirage. On peut donc effectuer un nombre de tours déterminé sur la longueur de la fibre. Si ce volume d'étirage était fixe et rigide, au bout d'un certain nombre de tours de rotation, la fibre casserait, ayant atteint ses limites de résistance élastique.

Mais ici l'extrémité du volume d'étirage est un cône visqueux qui, lorsque le couple de torsion lui est appliqué, crée un couple résistant. Il y a donc un équilibre qui se crée entre le couple de torsion et le couple visqueux résistant.

Si l'on continue à tordre la fibre à son extrémité, le cône va se déformer et vriller du nombre de tours imposés à l'extrémité de la fibre.

Il y a simultanément à ce mouvement de rotation du cône visqueux un mouvement d'étirage de la fibre.

Le résultat désiré est qu'à une certaine longueur de fibre étirée corresponde un nombre de tours de torsion de celle-ci.

Ainsi pendant la mise en équilibre du processus il y a augmentation de la valeur du couple de torsion de la fibre et ensuite seul le cône visqueux situé à l'extrémité de ce volume d'étirage va subir ce couple de torsion et se vriller.

A l'équilibre la longueur de fibre située entre l'extrémité de la fibre subissant la rotation et l'étirage et le cône visqueux est torsadée du nombre de tours connu et constant choisi, et le cône visqueux se vrille sous l'effet d'un couple constant.

La fibre est donc torsadée et étirée, elle est alors simultanément trempée pour figer l'état de haute température.

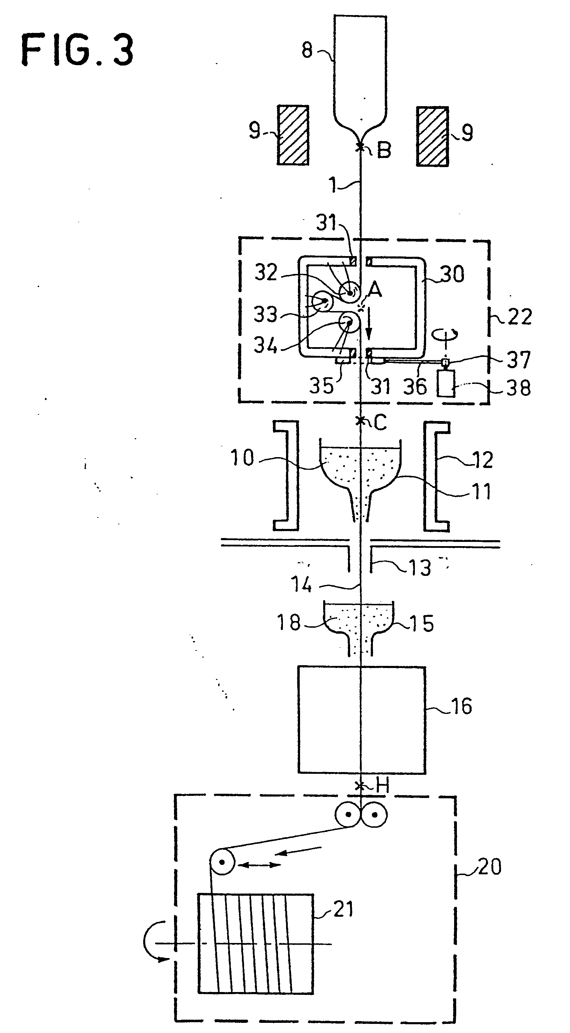

Un dispositif de torsion d'une fibre pour conserver la polarisation circulaire induite selon le procédé illustré à la figure 1 est schématisé par la figure 2 qui est un dispositif de l'art connu.

Ainsi la figure 2 illustre les différents éléments d'une machine de fibrage mettant en oeuvre le procédé décrit. Ces différents éléments sont les suivants. Une préforme 8 qui est positionnée à l'intérieur des moyens de fusion 9, qui peuvent être un chalumeau, un four à effet Joule, un four à induction hautes, moyennes ou basses fréquences, est à l'origine de la fibre 1. Ces moyens de fusion 9 ramollissent la préforme 8. La matière commence à couler et l'on obtient par étirage et torsion une fibre 1.

Un enducteur, représenté en 11, contenant par exemple du verre fondu 10 grâce à des moyens 12 permettant la fusion de ce verre de frette, permet d'enduire la fibre 1 qui est torsadée pendant sa fabrication.

Des moyens de trempe 13 permettent de mémoriser cet état de la fibre 1 en solidifiant le matériau d'enduction.

On obtient en 14 la fibre torsadée et enduite; en 15 et 16 sont représentés des moyens d'enduction de la fibre pour assurer sa protection; ce peut être par exemple une enduction d'une résine époxy ou de métal. En 19 est représenté un dispositif de fibrage permettant d'étirer et de torsader la fibre pendant sa fabrication.

Sur cette figure 2, un seul moyen de trempe a été représenté en 13, mais il peut en exister aussi un à la sortie du four 9, lorsque la fibre a été torsadée, pour figer l'état de la fibre.

Les moyens de trempe considérés peuvent être par exemple un rideau d'eau, un panneau rayonnant du froid, un flux de gaz froid. Ce peut être l'air atmosphérique s'il s'agit d'une enduction de verre par exemple.

De plus, en 16 se trouve un dispositif qui permet la solidification du matériau 18 formant la couche de protection appliquée par l'enducteur 15 au matériau 10 appliqué par l'enducteur 11. Ce peut être une polymérisation s'il s'agit par exemple d'une enveloppe en plastique, ce peut être notamment une polymérisation aux rayons ultra-violets. Ce peut être aussi une trempe.

Le dispositif de l'invention reprend un certain nombre d'éléments du dispositif représenté sur la figure 2, mais le dispositif de fibrage représenté en 19 est réalisé à présent avec un dispositif d'étirage 20 seul, qui permet par exemple l'enroulement de la fibre sur un tambour 21 par des moyens d'enroulement à tambour et trancanage classique comme représenté à la figure 3.

Au point A pris avant les moyens d'enduction 11 du dispositif de la figure 2, un dispositif objet de l'invention, permet de torsader la fibre 1 en cours d'étirage sous l'effet du tambour 21. Soit C un point pris arbitrairement entre le point B et le point H, situé avant le tambour 21, pour illustrer la mise en oeuvre de l'invention. Entre A et C la fibre est torsadée élastiquement. Entre C et H la fibre torsadée défile linéairement à travers tous les dispositifs décrits à la figure 2. En B, extrémité du volume d'étirage, la fibre tourne sur elle-même pendant l'étirage et le couple de torsion et le mouvement se dissipent en écoulement visqueux, ayant pour conséquence d'homogénéiser le matériau constituant la source de matière ramollie 8.

La fibre 1 fabriquée à partir d'une source de matière ramollie 8 est simultanément étirée et torsadée par l'action conjointe d'un dispositif de traction 20 et d'un dispositif de torsion 22 situé en A. Le dispositif 20 est un dispositif sans glissement qui permet par exemple d'enrouler la fibre sans lui faire subir de torsion supplémentaire gênante.

Le dispositif 11 permet l'enduction de la fibre torsadée afin de figer sa torsade par une frette rigide obtenue par refroidissement ou trempe rapide du matériau de frettage 10 à l'aide des moyens de trempe 13.

En 15 est appliqué un matériau d'enduction et de protection 18 de la frette, dont le figeage est obtenu par l'action du dispositif 16.

Le stockage et le conditionnement de l'objet à stucture chiralique est assuré par le dispositif 20.

L'originalité de l'invention réside dans l'utilisation simultanée du dispositif 22 situé en A et de l'enduction par les dispositifs 11 et 15, et de conditionnement réalisé par le dispositif 20.

Le dispositif 22 comprend, par exemple les différents éléments suivants:

Un arceau tournant 30 monté sur deux paliers creux 31 tourne autour de l'axe de fibrage. Il supporte trois poulies 32, 33, 34 sur lesquelles passe sans glissement la fibre 1. La rotation de l'arceau entraîne la torsion de la fibre. L'arceau 30 est entraîné par une courroie crantée 36 disposée entre deux poulies crantées l'une 35 solidaire de l'arceau, et l'autre 37 solidaire de l'axe du moteur d'entraînement 38.

La fibre torsadée élastiquement défile linéairement à travers le dispositif de frettage 11, et son dispositif annexe de trempage 13. Le produit appliqué peut être un verre, un métal, un polymère à forte rigidité.

Cette frette doit ensuite être protégée par un revêtement appliqué en 15 et traité par les moyens de solidification 16, ce peut être une résine silicone, epoxy, ou fluorocarbonée.

Le dispositif de tirage peut être simplement un tambour de fibrage et d'enroulement dont le moteur est asservi à un capteur de diamètre de fibre placé à la sortie du four de fibrage 9.

Dans le cas ou l'on n'applique pas un revêtement protecteur en 15 sur la frette de verre, il est possible d'utiliser le verre encore chaud pour coller la fibre sur le tambour récepteur qui pourrait être avantageusement en verre à faible coefficient de dilatation, voire en silice ou silice dopée titane.

On peut aussi utiliser un cabestan multipoulies afin d'éviter le glissement en torsion de la fibre, complété par un tambour de réception sans tension à trancanage classique.

Le dispositif de l'invention permet donc la fabrication en ligne d'une fibre torsadée, revêtue d'une protection et donc directement utilisable ou câblable, et conservant la polarisation circulaire.

Les avantages de ce dispositif par rapport aux solutions antérieures sont les suivantes:

- seul le dispositif 22 proposé est en rotation; la préforme ne tourne pas, ni les organes de bobinage, ni la fibre lors de son défilement à travers les divers enducteurs.

- il est facile de faire tourner le dispositif 22 à très grande vitesse afin de réaliser des fibres torsadées de 50 à 200 tours par mètre à des vitesses de fibrage classiques de l'ordre de 60 m/min.

On peut considérer par exemple un fibrage à 60 m/min soit 1 m/s et une torsion à 200 tours/m soit 200 tours/s, ce qui nécessite une rotation de 1200 tours/min. Mais cette vitesse n'est pas limitative.

Les fibres ainsi obtenues par le procédé de l'invention peuvent servir à la réalisation de capteurs optiques, ce peut être par exemple des capteurs de courant électrique.

## Revendications

1. Dispositif de fabrication d'un objet (1) de structure chiralique comportant une source (8) de matière formable constituant un volume d'étirage, suivie de moyens d'enduction (11) de l'objet d'une enveloppe jouant le rôle de frette, puis de moyens de trempage (13), permettant de solidifier cette enveloppe autour de cet objet, et de moyens de traction de cet objet (1) à partir de ce volume d'étirage, le dispositif comportant également des moyens de torsion de cet objet, caractérisé en ce que les moyens de torsion (22) de cet objet sont disposés entre la source (8) et les moyens d'enduction (11).

2. Dispositif selon la revendication 1, caractérisé en ce que les moyens de torsion (22) comprennent un arceau (30) monté sur deux paliers creux (31) tournant autour de l'axe de fibrage; cet arceau supportant trois poulies (32, 33, 34) sur lesquelles passe sans glissement l'objet (1) étiré, la rotation de l'arceau entrainant la torsion de l'objet (1).

3. Dispositif selon la revendication 1, caractérisé en ce que la source formant un volume d'étirage est une préforme (8), le dispositif aussi comportant des moyens de support de cette préforme (8) et des moyens de fusion (9), supportés à l'origine de l'objet (1).

4. Dispositif selon la revendication 3, caractérisé en ce que la préforme (8) est en verre.

5. Dispositif selon la revendication 1, caractérisé en ce que l'enveloppe jouant le rôle de frette est réalisée à partir d'un matériau (10) qui est du verre.

6. Dispositif selon la revendication 1, caractérisé en ce que le matériau (10) utilisé pour l'enveloppe jouant le rôle de frette est du métal.

7. Dispositif selon la revendication 1, caractérisé en ce que le matériau (10) utilisé pour l'enveloppe jouant le rôle de frette est un polymère à forte rigidité.

8. Dispositif selon la revendication 1, caractérisé en ce qu'il comprend en outre après les moyens d'enduction (11) réalisant l'enveloppe servant de frette et les moyens de trempe (13), des moyens d'enduction (15) pour réaliser une couche de protection suivis de moyens de solidification (16) de cette couche de protection.

9. Dispositif selon la revendication 8, caractérisé en ce que le matériau (18) utilisé pour réaliser la couche de protection est une résine epoxy.

10. Dispositif selon la revendication 8, caractérisé en ce que le matériau (18) utilisé pour réaliser la couche de protection est une résine fluorocarbonée.

11. Dispositif selon la revendication 8, caractérisé en ce que le matériau (18) utilisé pour réaliser la couche de protection est une résine silicone.

## Patentansprüche

1. Vorrichtung zur Herstellung eines eine Schraubenstruktur aufweisenden Gegenstandes (1), mit einer Quelle (8) eines formbaren Materials, welches ein Ziehvolumen bildet, gefolgt von Mitteln (11) zur Beschichtung des Gegenstandes mit einer Hülle, welche die Funktion einer Bandage erfüllt, anschließend von Abschreckmitteln (13), welche ein Erstarren dieser Hülle um diesen Gegenstand herum gestatten, sowie von Mitteln zum Herausziehen dieses Gegenstandes (1) aus diesem Ziehvolumen, wobei die Vorrichtung ferner Mittel für eine Torsionsverformung dieses Gegenstandes umfaßt, dadurch gekennzeichnet, daß die Mittel (22) zur Torsionsverformung dieses Gegenstandes zwischen der Quelle (8) und den Beschichtungsmitteln (11) angeordnet sind.

2. Vorrichtung nach Anspruch 1, dadurch gekennzeichnet, daß die Torsionsmittel (22) einen Bogen (30) umfassen, der auf zwei Hohllagern (31) gelagert ist, die um die Faserachse drehbar sind; wobei dieser Bogen drei Rollen (32, 33, 34) lagert, über welche der gezogene Gegenstand (1) ohne zu gleiten verläuft, wobei die Drehung des Bogens die Torsionsverformung des Gegenstandes (1) verursacht.

3. Vorrichtung nach Anspruch 1, dadurch gekennzeichnet, daß die ein Ziehvolumen bildende Quelle ein Vorformling (8) ist, wobei die Vorrichtung ferner Mittel zur Halterung dieses Vorformlings (8) und Schmelzmittel (9) umfaßt, die am Ursprung des Gegenstandes (1) gehaltert sind.

4. Vorrichtung nach Anspruch 3, dadurch gekennzeichnet, daß der Vorformling (8) aus Glas besteht.

5. Vorrichtung nach Anspruch 1, dadurch gekennzeichnet, daß die Hülle, welche die Funktion einer Bandage erfüllt, aus einem Material (10) gebildet ist, welches aus Glas besteht.

6. Vorrichtung nach Anspruch 1, dadurch gekennzeichnet, daß das Material (10), welches für die die Funktion einer Bandage erfüllende Hülle verwendet wird, ein Metall ist.

7. Vorrichtung nach Anspruch 1, dadurch gekennzeichnet, daß das Material (10), welches für die die Funktion einer Bandage erfüllende Hülle verwendet wird, ein Polymer von hoher Steifigkeit ist.

8. Vorrichtung nach Anspruch 1, dadurch gekennzeichnet, daß sie ferner hinter den Beschichtungsmitteln (11), welche die als Bandage dienende Hülle herstellen, und den Abschreckmitteln (13) Beschichtungsmittel (15) aufweist, um eine Schutzschicht herzustellen, gefolgt von Mitteln (16) für die Erstarrung dieser Schutzschicht.

9. Vorrichtung nach Anspruch 8, dadurch gekennzeichnet, daß das Material (18), welches für die Herstellung der Schutzschicht verwendet wird, ein Epoxidharz ist.

10. Vorrichtung nach Anspruch 8, dadurch gekennzeichnet, daß das Material (18), welches für die Herstellung der Schutzschicht verwendet wird, ein Fluorkohlenwasserstoffharz ist.

11. Vorrichtung nach Anspruch 8, dadurch gekennzeichnet, daß das Material (18), welches für die Herstellung der Schutzschicht verwendet wird, ein Siliconharz ist.

## Claims

1. Device for fabricating an object (1) of helical structure comprising a source (8) of moldable material forming a drawing volume, followed by means (11) for coating the object with an envelope having the function of a case, subsequently by quenching means (13) permitting to solidify this envelope around this object, and means for drawing this object (1) from this drawing volume, the device further comprising means for twisting this object, characterized in that the means (22) for twisting this object are arranged between the source (8) and the coating means (11).

2. Device according to claim 1, characterized in that the twisting means (22) comprise an arc (30) mounted on hollow bearings (31) rotating about the fiber axis; this arc supporting three rollers (32, 33, 34) whereupon the drawn object (1) extends without sliding, the rotation of the arc causing the torsion of the object (1).

3. Device according to claim 1, characterized in that the source forming a drawing volume is a preform (8), the device further comprising means for supporting this preform (8) and fusing means (9) supported at the origin of the object (1).

4. Device according to claim 3, characterized in that the preform (8) is of glass.

5.Device according to claim 1, characterized in that the envelope having the function of a case is formed from a material (10) which is glass.

6. Device according to claim 1, characterized in that the material (10) used for the envelope having the function of the case is a metal.

7. Device according to claim 1, characterized in that the material (10) used for the envelope having the function of the case is a polymer of high rigidity.

8. Device according to claim 1, characterized in that it further comprises behind the coating means (11) forming the envelope used as a case and the quenching means (13) coating means (15) for producing a protection layer, followed by solidification means (16) of this protection layer.

9. Device according to claim 8, characterized in that the material (18) used to produce the protection layer is an epoxy resin.

10. Device according to claim 8, characterized in that the material (18) used for producing the protection layer is a fluorocarbonated resin.

11. Device according to claim 8, characterized in that the material (18) used to produce the protection layer is a silicon resin.

# FIG.2

# FIG.1

# FIG. 3